## Europäisches Patentamt
## European Patent Office
## Office européen des brevets

(11) Veröffentlichungsnummer: **0 111 122**
**B1**

(12)

# EUROPÄISCHE PATENTSCHRIFT

(45) Veröffentlichungstag der Patentschrift:
04.02.87

(21) Anmeldenummer: 83110601.8

(22) Anmeldetag: 24.10.83

(51) Int. Cl.⁴: **C 08 J 5/04, B 29 C 67/12,**
**C 08 J 5/24, C 08 G 18/08**

(54) Verfahren zur kontinuierlichen Herstellung von Halbzeug aus faserverstärkten, thermoplastischen Polyurethanen.

(30) Priorität: 13.11.82 DE 3242069

(43) Veröffentlichungstag der Anmeldung:
20.06.84 Patentblatt 84/25

(45) Bekanntmachung des Hinweises auf die Patenterteilung:
04.02.87 Patentblatt 87/6

(84) Benannte Vertragsstaaten:
AT BE CH DE FR GB IT LI NL SE

(56) Entgegenhaltungen:
EP-A-0 006 557
DE-A-1 454 988
DE-A-2 164 381
DE-A-2 524 351
FR-A-2 217 140
FR-A-2 443 325

(73) Patentinhaber: BASF Aktiengesellschaft, Carl-Bosch- Strasse 38, D-6700 Ludwigshafen (DE)

(72) Erfinder: Werner, Frank, Dr., Waldstrasse 38 b,
D-6730 Neustadt (DE)
Erfinder: Zeitler, Gerhard, Dr., Lessingstrasse 11,
D-6717 Hessheim (DE)
Erfinder: Roeber, Artur, Dackenheimer Strasse 6,
D-6700 Ludwigshafen (DE)
Erfinder: Bittner, Gerhard, Dr., Lohneufer 36,
D-2840 Diepholz 1 (DE)

## Beschreibung

Die Herstellung von thermoplastischen Polyurethanen durch Umsetzung von im wesentlichen linearen, höhermolekularen Polyhydroxylverbindungen, wie z.B. hydroxylgruppenhaltigen Polyestern aus aliphatischen Dicarbonsäuren und Alkylenglykolen oder aus Hydroxycarbonsäuren oder hydroxylgruppenhaltigen Polyethern auf Basis von Polytetrahydrofuran, Kettenverlängerungsmitteln, wie z.B. kurzkettigen Diolen oder Diaminen, und organischen Diisocyanaten, wie z.B. 1,6-Hexamethylen-, Isophoron-, 2,4-Toluylen-, 4,4'-Diphenylmethan- und 1,5-Naphthylen-diisocyanat ist Gegenstand zahlreicher Publikationen. Übersichtlich werden diese Polyurethan-Elastomeren z.B. beschrieben im Kunststoff-Handbuch, Band VII, Polyurethane von R. Vieweg und H. Höchtlen, Carl Hanser Verlag, München 1966, Seiten 206ff oder Kunststoffe 68 (1978) 12, Seiten 819-825.

Derartige Polyurethane können nach Angaben der DE-OS 2 524 351 zur Herstellung von flexiblen Beschichtungen oder Folien verwendet werden.

Die Herstellung von Halbzeug aus faserverstärkten thermoplastischen Kunststoffen ist ebenfalls bekannt.

In der DE-OS 14 54 988 (GB 1 146 036) wird ein Verfahren zur Herstellung von Formteilen beschrieben, bei dem Halbzeug aus faserverstärkten Thermoplasten bis zum plastischen Fließen erhitzt und anschließend verformt wird. Dadurch lassen sich auf einfache Weise stabile und stark beanspruchbare Formteile herstellen, die z.B. im Automobilbau oder Möbelbau Anwendung finden können. Das Halbzeug, das nach diesem Verfahren verarbeitet wird, besteht aus ebenen Bahnen, Tafeln oder Platten, die durch Beschichten von textilen Flächengebilden, z.B. Glasfasermatten, mit einer Kunststoffschmelze mittels eines Extruders hergestellt werden können. Bei diesem einfachen Verfahren ist jedoch eine einwandfreie Tränkung der Fasermatte mit Thermoplastschmelze auch dann nicht möglich, wenn die Fasermatte beidseitig beschichtet wird. Im fertigen Halbzeug bilden sich Hohlräume oder Lunker, wodurch die Festigkeit der Endprodukte stark herabgesetzt wird.

Diese Erscheinungen werden auch nicht vollständig vermieden, wenn man nach der DD-PS 20 549 oder nach der DE-OS 20 07 370 (GB 1 306 145) lockere Glasfasermatten mit einem thermoplastischen Kunststoff laminiert oder imprägniert und anschließend heiß verpreßt. Außerdem ergibt sich bei einer kontinuierlichen Ausführungsform dieses Verfahrens der Nachteil, daß das heiße Halbzeug anschließend an das Verpressen in einem besonderen Arbeitsgang abgekühlt werden muß. Das dauert verhältnismäßig lange, so daß die Zykluszeiten stark verlängert werden.

Nach Angaben der DE-OS 23 12 816 (GB 1 451 824) werden zur kontinuierlichen Herstellung von Halbzeug aus faserverstärkten thermoplastischen Kunststoffen ein oder mehrere, auf 150 bis 300°C erwärmte, textile Flächengebilde und eine Schmelze eines thermoplastischen Kunststoffes zusammengeführt und dann in einer Druckzone miteinander verpreßt und abgekühlt. Nachteilig beim Einarbeiten von thermoplastischen Kunststoffen über die Schmelze in textile Flächengebilde, beispielsweise Glasfasermatten, ist die durch deren hohe Viskosität bedingte unzureichende Benetzung der textilen Flächengebilde, die zu Fehlstellen in Form von Lufteinschlüssen führen können.

Ein anderes Prinzip zur Herstellung von Halbzeug aus faserverstärkten Thermoplasten ist in der DE-OS 20 54 471 beschrieben. Danach werden die Fasermatten mit Thermoplastdispersionen beschichtet. Anschließend wird das Wasser verdampft und das Halbzeug bis zum Erweichen des Kunststoffes erwärmt. Nach Angaben der EP-A- 0 006 557 werden flächenförmige Glasfaserformationen mit einem Reaktivsystem, bestehend aus einem organischen Polyisocyanat, einer organischen Polyhydroxylverbindung sowie gegebenenfalls weiteren gegenüber Isocyanaten reaktiven Verbindungen, in Form einer 50 bis 90 gew.-%igen Lösung in einem oder mehreren gegenüber Isocyanaten inerten organischen Lösungsmitteln getränkt. Nach diesen Methoden lassen sich zwar lunkerfreie Halbzeuge herstellen, die Verfahren sind jedoch sehr aufwendig, da zur vollständigen Entfernung des Wassers oder der inerten Lösungsmittel komplizierte Trocknungseinrichtungen angewandt werden müssen.

Reversibel warmverformbare faserverstärkte harte Polyurethankunststoffe werden gemäß DE-AS 21 64 381 erhalten, wenn man anorganische und/oder organische Fasern in ein bei Temperaturen bis 50°C flüssiges Polyurethan-Reaktionsgemisch einarbeitet, das durch Umsetzung von Hydroxylgruppen aufweisenden Polyestern und/oder Polyethern mit Hydroxylzahlen von 100 bis 600 mit Urethan-, Biuret-, Harnstoff-, Allophanat-, Carbodiimid-, Uretonimin- und/oder Isocyanuratgruppen aufweisenden Polyisocyanaten oder Polyphenylpolymethylen-polyisocyanaten hergestellt wird. Nachteilig hierbei ist, daß nur modifizierte Polyisocyanate verwendbar sind, die nicht nur die mechanischen Eigenschaften beeinflussen, sondern auch das Verfahren verteuern.

Der Erfindung lag die Aufgabe zugrunde, ein einfaches und rasch durchzuführendes Verfahren zur kontinuierlichen Herstellung von Halbzeug aus faserverstärkten thermoplastischen Polyurethanen zu entwickeln, das die obengenannten Mängel weitgehend beseitigt und aus welchem sich Formteile mit hohen Festigkeitswerten herstellen lassen.

Diese Aufgabe wurde gelöst durch ein Verfahren zur kontinuierlichen Herstellung von Halbzeug aus faserverstärkten, thermoplastischen Polyurethanen, das dadurch gekennzeichnet ist, daß man
a) organische Polyisocyanate,
b) Polyhydroxylverbindungen mit Molekulargewichten von 500 bis 8000 und
c) Kettenverlängerungsmittel mit Molekulargewichten unter 500 in Gegenwart von
d) Katalysatoren sowie gegebenenfalls
e) Hilfsmitteln und/oder
f) Zusatzstoffen

kontinuierlich in solchen Mengen mischt, daß das Verhältnis von NCO-Gruppen der Komponente a) zur Summe der Zerewitinoff aktiven Wasserstoffatome der Komponenten b) und c) 0,8 bis 1,3 ist und der Gewichtsanteil der Summe aus organischem Polyisocyanat a) und Kettenverlängerungsmittel c), bezogen auf das Gewicht des thermoplastischen Polyurethans, 10 bis 80 Gew.-% beträgt, die fließfähige Reaktionsmischung auf ein faserhaltiges Flächengebilde aufbringt und nach dem Bandverfahren in einer temperierten Zone bei Temperaturen von 60 bis 220°C bis zur Erstarrung reagieren läßt.

Durch die niedrige Viskosität der reaktionsfähigen Polyurethanmischung, die je nach Aufbaukomponente, und Herstellungsbedingungen bei 70°C eine Viskosität von 10 bis 600 m.Pa.s, vorzugsweise von 300 bis 500 m.Pa.s besitzt, wird eine leichte und vollständige Benetzung der faserhaltigen Flächengebilde erreicht. Ein kostspieliges Aufschmelzen der thermoplastischen Polyurethane und die Verteilung der Schmelze auf dem faserhaltigen Flächengebilde, verbunden mit den genannten Nachteilen, kann dadurch vermieden werden.

Zu den erfindungsgemäß verwendbaren Aufbaukomponenten für die thermoplastischen Polyurethane und faserhaltigen Flächengebilde möchten wir folgendes ausführen:

Für das erfindungsgemäße Verfahren können im prinzip beliebige organische Polyisocyanate eingesetzt werden; bevorzugt verwendet werden aromatische Polyisocyanate und insbesondere aromatische Diisocyanate. Beispielhaft genannt seien p-Phenylendiisocyanat, 2,4- und 2,6-Toluylendiisocyanat oder beliebige Gemische dieser Isomeren, 4,4'-Diphenyldiisocyanat, - 3,3'-Dimethyl-4,4'-diisocyanato-diphenyl, 4,4'-Diisocyanato-diphenyl-ethan-1,2, Gemische aus 4,4'-Diisocyanato-diphenylethan-1,2 mit 2,4'-und/oder 2,2'-Diisocyanato-diphenylethan-1,2-Isomeren mit einem Gehalt an 4,4'-Diisocyanato-diphenylethan-1,2 von mehr als 95 Gew.%, Naphthalin-1,5-diisocyanat und 4,4'-Diisocyanato-diphenylmethan. Letzteres kann auch in Form der üblichen technischen Produkte, welche geringe Mengen an Nebenprodukten, wie z.B. das 2,2'- und/oder insbesondere das 2,4'-Isomere enthalten, oder als modifiziertes Urethan- oder Carbodiimidgruppen enthaltendes flüssiges Polyisocyanat eingesetzt werden. Vorzugsweise Anwendung finden 4,4'-Diisocyanato-diphenylmethan und Naphthalin-1,5-diiso-cyanat.

Geeignete höhermolekulare Polyhydroxylverbindungen sind die nach dem Stand der Technik bekannten Polyester, Polyesteramide, Polyether, Polyacetale und Polythioether mit endständigen Hydroxylgruppen und Molekulargewichten von 500 bis 8000, vorzugsweise von 1200 bis 8000 und insbesondere 1700 bis 5000. Die höhermolekularen Polyhydroxylverbindungen sind üblicherweise di- bis trifunktionell, vorzugsweise jedoch zumindest überwiegend linear, d.h. im Sinne der Isocyanatreaktion difunktionell aufgebaut. Gegebenenfalls kann es auch vorteilhaft sein, in untergeordneten Mengen monofunktionelle Verbindungen mitzuverwenden; diese dürfen allerdings höchstens in solchen Mengen eingesetzt werden, daß ein Mittelwert von 2 Hydroxylgruppen pro Molekül in der Mischung nicht unterschritten wird. Die Polyhydroxylverbindungen können sowohl alleine als auch in beliebigen Mischungen untereinander zur Anwendung kommen.

Geeignete Polyester mit endständigen Hydroxylgruppen können beispielsweise aus Dicarbonsäuren mit 2 bis 12 C-Atomen, vorzugsweise 4 bis 6 C-Atomen und mehrwertigen Alkoholen hergestellt werden. Die Dicarbonsäuren können aliphatischer, cycloaliphatischer, aromatischer und/oder heterocyclischer Natur sein, sie können gegebenenfalls, z.B. Heteroatome enthalten, durch Halogenatome substituiert und/oder ungesättigt sein.

Geeignete Dicarbonsäuren sind z.B. aliphatische Dicarbonsäuren wie Bernsteinsäure, Glutarsäure, Adipinsäure, Korksäure, Azelainsäure und Sebacinsäure, aromatische Dicarbonsäuren wie Phthalsäure, Isophthalsäure oder Terephthalsäure, cycloaliphatische Dicarbonsäuren wie Hexahydrophthalsäure oder Endomethylentetrahydrophthalsäure sowie ungesättigte Dicarbonsäuren wie Malein- oder Fumarsäure.

Die Dicarbonsäuren können selbstverständlich einzeln oder in Form beliebiger Gemische untereinander eingesetzt werden. Zur Herstellung der hydroxylgruppenhaltigen Polyester kann es gegebenenfalls vorteilhaft sein, anstelle der freien Carbonsäuren die entsprechenden Carbonsäurederivate, wie z.B. Carbonsäureester mit 1 bis 4 C-Atomen im Alkoholrest, Carbonsäureanhydride oder Carbonsäurechloride zu verwenden. Gegebenenfalls können auch cyclische Lactone mitverwendet werden.

Beispiele für mehrwertige Alkohole sind Diole mit 2 bis 16 C-Atomen, vorzugsweise 2 bis 6 C-Atomen, welche gegebenenfalls Heteroatome enthalten und/oder substituiert sein können, wie z.B. Ethylenglykol, Propylen-glykol-1,2 und -1,3, Butandiol-1,3 und -1,4, Pentandiol-1,5, Hexandiol-1,6, Octandiol-1,8, Decandiol-1,10, Neopentylglykol, 2-Methylpropan-diol-1,3, 3-Methylpentandiol-1,5, Diethylenglykol, Triethylenglykol, Tetraethylenglykol, Dipropylenglykol und seine höheren Homologen.

Ferner können geringe Mengen an höherfunktionellen, vorzugsweise trifunktionellen Alkoholen, wie z.B. Glycerin, Trimethylolpropan, Hexantriol u.a. mitverwendet werden. Die genannten mehrwertigen Alkohole können alleine oder in beliebigen Mischungen untereinander angewandt werden.

Geeignet sind ferner hydroxylgruppenhaltige Polyester der Kohlensäure mit den vorgenannten Diolen, insbesondere solchen mit 4 bis 6 C-Atomen, wie z.B. Butandiol-1,4 und/oder Hexandiol-1,6, Polykondensationsprodukte von -Hydroxycarbonsäuren, z.B. -Hydroxycapronsäure, sowie Polymerisationsprodukte von cyclischen Lactonen, wie z.B. gegebenenfalls substituierten -Caprolactonen.

Hydroxylgruppenhaltige Polyesteramide werden hergestellt aus den obengenannten Dicarbonsäuren und mehrwertigen Alkoholen unter Mitverwendung von Aminoalkoholen und/oder Diaminen, wie z.B. Ethanolamin, Propanolamin, N-Methylethanolamin, Ethylendiamin, Hexamethylendiamin oder Piperazin.

Geeignete höhermolekulare, hydroxylgruppenhaltige Polyether sind die nach dem Stand der Technik bekannten Polymerisationsprodukte von Epoxiden wie z.B. Ethylenoxid, 1,2-Propylenoxid, 1,2- bzw. 2,3-Butylenoxid oder Epichlorhydrin mit sich selbst, hergestellt z.B. in Gegenwart von Lewis-Säuren als Katalysatoren wie z.B. $BF_3$, oder Anlagerungsprodukte dieser Epoxide, vorzugsweise von Ethylen- und/oder 1,2-Propylenoxid, gegebenenfalls in beliebigen Gemischen untereinander oder nacheinander, an di- und/oder trifunktionelle Startermoleküle wie z.B. Wasser, Ammoniak, Amine wie z.B. Anilin, oder vorzugsweise mehrwertige Alkohole wie z.B. Ethylenglykol, Diethylenglykol, Propylenglykol-1,2 und -1,3, Butandiol-1,4, Hexandiol-1,6, Hydrochinon, 4,4'-Dihydroxy-diphenylpropan, 4,4'-Dihydroxy-dicyclohexylpropan, Glycerin, Trimethylolpropan und Hexantriol, hergestellt in Gegenwart von sauren oder vorzugsweise basischen Katalysatoren, wie z.B. Alkalihydroxiden oder -alkoholaten.

Hydroxylgruppenhaltige Polythioether werden erhalten aus den obengenannten Epoxiden und schwefelhaltigen Startermolekülen mit reaktiven Wasserstoffatomen.

Geeignet sind ferner Polymerisationsprodukte von cyclischen Ethern wie z.B. Hexamethylenoxid, Octamethylenoxid und vorzugsweise Tetrahydrofuran.

Als Polyacetale kommen vorzugsweise wasserunlösliche Formale, wie z.B. Polybutandiolformal oder -hexandiolformal, in Betracht. Die erfindungsgemäß geeigneten höhermolekularen Polyhydroxylverbindungen können auch bereits Urethan- und/oder Harnstoffgruppen enthalten; auch Dispersionen von natürlichen oder synthetischen Polymeren oder feinteilige mineralische Suspensionen in den vorgenannten Polyhydroxylverbindungen sind verwendbar.

Als Polyhydroxylverbindungen verwendet man im wesentlichen lineare hydroxylgruppenhaltige Polyester, wie z.B. Ethandiol-, Butandiol-1,4-, Ethandiol-Butandiol-1,4-, Hexandiol-1,6-Neopentylglykol-polyadipate, Hexandiol-1,6-polycarbonate und/oder Polycaprolactone oder im wesentlichen lineare hydroxylgruppenhaltige Polytetrahydrofurane und/oder Polyether aus 1,2-Propylenoxid und Ethylenoxid, in denen mehr als 50 %, vorzugsweise 60 bis 90 % oder mehr der Hydroxylgruppen primäre Hydroxylgruppen sind und bei denen zumindest ein Teil des Ethylenoxids als endständiger Block angeordnet ist.

Solche Polyetherole können erhalten werden, indem man z.B. an das Startermolekül zunächst das 1,2-Propylenoxid und daran anschließend das Ethylenoxid polymerisiert oder zunächst das gesamte 1,2-Propylenoxid im Gemisch mit einem Teil des Ethylenoxids copolymerisiert und den Rest des Ethylenoxids anschließend anpolymerisiert oder schrittweise zunächst einen Teil des Ethylenoxids, dann das gesamte 1,2-Propylenoxid und dann den Rest des Ethylenoxids auf das Startermolekül aufpolymerisiert.

Geeignete Kettenverlängerungsmittel mit Molekulargewichten unter 500, vorzugsweise von 60 bis 300, sind die nach dem Stand der Technik bekannten und üblichen Diole. Als niedermolekulare Diole kommen z.B. die vorstehend zur Herstellung der hydroxylgruppenhaltigen Polyester genannten, vorzugsweise linear aufgebauten aliphatischen Diole mit 4 bis 6 C-Atomen in Betracht. Beispielhaft genannt seien:

Ethandiol, Butandiol-1,4, Hexandiol-1,6, Diethylenglykol, Dipropylenglykol und Hydrochinon-di-ß-hydroxyethyl-ether oder deren Gemische, wobei Butandiol-1,4 bevorzugt eingesetzt wird.

Zur Herstellung der thermoplastischen Polyurethane nach dem erfindungsgemäßen Verfahren werden die Ausgangskomponenten a) bis c) in solchen Mengen zur Reaktion gebracht, daß das Verhältnis von NCO-Gruppen der Komponente a) zur Summe der Zerewitinoff aktiven Wasserstoffatome der Komponenten b) und c) 0,8 bis 1,3, vorzugsweise 0,95 bis 1,1 und insbesondere ungefähr 1 ist und der Gewichtsanteil der Summe aus organischen Polyisocyanaten a) und Kettenverlängerungsmittel c), bezogen auf das Gewicht des nicht faserverstärkten Polyurethans 10 bis 80 Gew.%, vorzugsweise 40 bis 70 Gew.% beträgt. Bevorzugt verwendet man solche Aufbaukomponenten und Mengenverhältnisse, daß die aus der Reaktionsmischung entstehenden unverstärkten thermoplastischen Polyurethane eine Härte von 40 bis 80 Shore D, vorzugsweise von 50 bis 75 Shore D besitzen.

Die Herstellung der thermoplastischen Polyurethane wird in Gegenwart von Katalysatoren zur Beschleunigung der Polyaddition zwischen den organischen Polyisocyanaten und Polyhydroxylverbindungen und Kettenverlängerungsmitteln durchgeführt. Als Katalysatoren, die üblicherweise in Mengen von 0,001 bis 1 Gew.%, bezogen auf die Polyhydroxylverbindung, eingesetzt werden, kommen beispielsweise in Betracht: tertiäre Amine, wie z.B. Triethylamin, Tributylamin, Pyridin, N,N'-Dimethylcyclohexylamin, N-Alkylmorpholine, Diazabicyclooctan, N,N'-Dialkyl-piperazin oder Metallverbindungen wie z.B. Eisen(III)chlorid, Zinn(II)chlorid, Eisenacetylacetonat, Zinndioctoat, Dibutylzinndilaurat und Tetrabutylorthotitanat.

Als Hilfsmittel und Zusatzstoffe seien beispielsweise ferner genannt: Stabilisatoren gegen Licht, Hitze oder Verfärbung, Oxidations- und Hydrolyseschutzmittel, bakteriostatisch wirksame Substanzen, Fungizide, Flammschutzmittel, Weichmacher, Farbstoffe, Pigmente sowie organische oder anorganische Füllstoffe, Verstärkungsfasern und ähnliche.

Nähere Angaben über die obengenannten weiteren Hilfs- und Zusatzstoffe sind der Fachliteratur, beispielsweise der Monographie von J.H. Saunders und K.C. Frisch "High Polymers" Band XVI, Polyurethanes, Teil 1 und 2, Interscience 1962 bzw. 1964, zu entnehmen.

Als faserhaltige Flächengebilde kommen genadelte oder ungenadelte Matten, Vliese, Filze oder Gewebe in Betracht, die aus Kunststoff-, Kohlenstoffoder vorzugsweise Glasfasern oder Asbest hergestellt sein können. Vorzugsweise verwendet werden Glasfasermatten mit Flächengewichten von 100 bis 1200 g/m$^2$, vorzugsweise von 400 bis 600 g/m$^2$, die einzeln oder in mehreren Schichten mit der fließfähigen Polyurethanmischung getränkt werden. Das Verhältnis von thermoplastischem Polyurethan zu faserhaltigem Flächengebilde wird hierbei so gewählt, daß das fertige Halbzeug 10 bis 70 Gew.%, vorzugsweise 20 bis 60 Gew.% faserhaltiges Flächengebilde, insbesondere Glasfasern, enthält.

Zur Herstellung von Halbzeug aus faserverstärkten, thermoplastischen Polyurethanen nach dem erfindungsgemäßen Verfahren können die organischen Polyisocyanate, Polyhydroxylverbindungen, Kettenverlängerungsmittel und Katalysatoren sowie gegebenenfalls Hilfsmittel und/oder Zusatzstoffe nach dem one-shot-Verfahren einzeln mittels Dosierpumpen einem Mischkopf zugeführt, dort intensiv bei Temperaturen von 50 bis 140°C, vorzugsweise vor 60 bis 90°C gemischt und die fließfähige Reaktionsmischung direkt auf das faserhaltige Flächengebilde aufgetragen werden. Nach einer bevorzugten Ausführungsform werden jedoch die obengenannten Ausgangskomponenten vorab in den entsprechenden Mengenverhältnissen zu zwei Komponenten A und B, wobei die Komponente A vorzugsweise die Polyhydroxylverbindungen, Kettenverlängerungsmittel, Katalysatoren und gegebenenfalls Hilfsmittel und Zusatzstoffe enthält und die Komponente B aus den organischen Polyisocyanaten und gegebenenfalls Hilfsmitteln und Zusatzstoffen besteht, vereinigt, so daß nur diese 2 Komponenten dosiert, gefördert und im Mischkopf gemischt werden müssen.

Die reaktionsfähige Polyurethanmischung, die wie bereits dargelegt bei 70°C eine Viskosität von 10 bis 600 m.Pa.s, vorzugsweise von 300 bis 500 m.Pa.s, besitzt, wird direkt auf das faserhaltige Flächengebilde aufgetragen und mit einer Geschwindigkeit von 1 bis 40 m/Minute, vorzugsweise von 16 bis 25 m/Minute, und insbesondere ungefähr 20 m/Minute durch eine temperierte Zone von 1 bis 40 m, vorzugsweise 5 bis 20 m Länge geführt. In der temperierten Zone reagiert die Reaktionsmischung bei Temperaturen von 60 bis 220°C, vorzugsweise 100 bis 180°C aus und erstarrt. Damit die reaktionsfähige Polyurethanmischung nicht durch die kalten faserhaltigen Flächengebilde abgeschreckt wird, hat es sich als vorteilhaft erwiesen, diese auf 50 bis 200°C, vorzugsweise 100 bis 130°C, beispielsweise mittels Infrarotstrahler, vor dem Aufbringen der Reaktionsmischung zu erwärmen. Die faserhaltigen Flächengebilde werden zweckmäßigerweise von Rollen auf einem Träger, der die Form eines Förderbandes besitzt und beispielsweise aus beschichtetem oder unbeschichtetem Metall oder Kunststoff, beispielsweise Teflon, bestehen kann, geführt. Damit die niedrigviskose, reaktionsfähige Polyurethanmischung nicht das Förderband benetzt, falls es das faserhaltige Flächengebilde nach unten durchdringt, wird vorzugsweise zwischen dem faserhaltigen Flächengebilde und dem Träger eine Trennfolie aus thermoplastischem Kunststoff, beispielsweise aus Polyurethan, Polyamid oder Polyester, Aluminium, Papier oder ähnlich dichtem Material mitgeführt. Außerdem kann das mit Reaktionsmischung beaufschlagte faserhaltige Flächengebilde mit einer Deckfolie, die aus einem anderen oder vorzugsweise dem gleichen Material wie die Trennfolie besteht, beschichtet werden. Weiterhin hat es sich als zweckmäßig erwiesen, die mit Reaktionsmischung beaufschlagten faserhaltigen Flächengebilde mit Hilfe der Deck- und Trennfolie sowie dem Träger und mehreren Rollen auf eine gewünschte Dicke, beispielsweise von 0,2 bis 10 mm, vorzugsweise von 0,4 bis 4 mm zu pressen.

Durch eine geeignete Wahl der Ausgangskomponenten und deren Mengen, des Katalysators sowie der Bandgeschwindigkeit und Temperatur der temperierten Zone läßt sich das erfindungsgemäße Herstellungsverfahren für Halbzeug aus faserverstärktem thermoplastischem Polyurethan beliebig steuern. Das aus der temperierten Zone austretende Halbzeug kann sofort oder nach dem Abkühlen geschnitten und gestapelt werden. Es kann ferner unmittelbar oder nach Lagerung thermisch zu Formteilen verpreßt werden. Die dabei anfallenden Restabschnitte können gemahlen, granuliert und zu Formkörpern verspritzt werden, was gegenüber faserverstärkten Duromeren einen zusätzlichen Vorteil bedeutet.

Das nach dem erfindungsgemäßen Verfahren hergestellte Halbzeug aus faserverstärkten thermoplastischen Polyurethanen eignet sich insbesondere zur Herstellung von Formteilen für den Automobilkarosseriebau, als Gehäuseteile für den Maschinenbau, als Abdeckplatten und für Möbelteile.

### Beispiel 1

Eine Mischung aus
100 Gew.-Teilen eines Polybutandiol-1,4-adipats mit einer Hydroxylzahl von 56,
32 Gew.-Teilen Butandiol-1,4 und
1 Gew.-Teil 2,2',6,6'-Tetraisopropyldiphenylcarbodiimid
wurde auf 80°C erwärmt und mit 103 Gew.-Teilen auf 50°C erwärmtem 4,4'-Diphenylmethandiisocyanat in einem Mischkopf intensiv gemischt.

Das erhaltene niedrigviskose Reaktionsgemisch wurde mit einer Temperatur von 80 bis 110°C auf eine auf 100°C erwärmte Glasfasenmatte mit einem Flächengewicht von 600 g/m² aufgebracht. Die Glasfasermatte wurde hierbei auf einem mit einer Polyamidfolie belegten, beheizten Stahlband transportiert, das in einem isolierten Gehäuse lief. Nach dem Auftragen der Reaktionsmischung wurde eine weitere Polyamidfolie als Deckfolie zugeführt und die mit der Polyurethanmasse beaufschlagte Glasfasermatte sowie die Deck- und Trennfolie durch mehrere Rollen geführt. Das am Ende des Stahlbandes mit einer Temperatur von 130 bis 160°C aus dem isolierten Gehäuse austretende erstarrte Halbzeug wurde von den Polyamidfolien abgetrennt, abkühlen gelassen und bei Temperaturen von 200 bis 230°C zu 1,8 mm dicken Formkörpern verpreßt, aus welchen Prüfkörper ausgestanzt wurden, an denen die in der folgenden Tabelle zusammengefaßten mechanischen Eigenschaften gemessen wurden.

### Beispiel 2

Ein NCO-Gruppen enthaltendes Prepolymer, hergestellt aus 100 Gew.-Teilen eines Polyoxypropylenglykols mit einer Hydroxylzahl von 54 und 107 Gew.-Teilen 4,4'-Diphenylmethandiisocyanat, wurde auf 80°C erwärmt und mit 33 Gew.-Teilen auf 50°C erwärmtem Butandiol-1,4 in einem Mischkopf intensiv gemischt.

Das Reaktionsgemisch wurde analog den Angaben von Beispiel 1 zu einem Halbzeug verarbeitet. An den aus diesem Halbzeug ausgestanzten Prüfkörpern wurden die in der folgenden Tabelle zusammengefaßten mechanischen Eigenschaften gemessen.

### Beispiel 3

Eine Mischung aus
100 Gew.-Teilen eines Polyesterdiols mit einer Hydroxylzahl von 57, hergestellt aus Adipin-, Glutar- und Bernsteinsäure und einem Ethylen-Diethylenglykolgemisch,
2 Gew.-Teilen Butandiol-1,4 und
1 Gew.-Teil 2,2',6,6'-Tetraisopropyldiphenylcarbodiimid und
105 Gew.-Teilen 4,4'-Diphenylmethandiisocyanat
wurden analog den Angaben von Beispiel 1 mit einer Glasfasermatte zu einem Halbzeug verarbeitet. An aus diesem Halbzeug ausgestanzten Prüfkörpern wurden die in der folgenden Tabelle zusammengefaßten mechanischen Eigenschaften gemessen.

### Beispiel 4

Man verfuhr analog den Angaben von Beispiel 1, verwendete jedoch eine Glasfasermatte mit einem Flächengewicht von 450 g/m² und verpreßte zu einem 1,6 mm dicken Formkörper.

An aus diesem Halbzeug ausgestanzten Prüfkörpern wurden die in der folgenden Tabelle zusammengefaßten mechanischen Eigenschaften gemessen.

### Beispiel 5

Man verfuhr analog den Angaben von Beispiel 3, verwendete jedoch eine Glasfasermatte mit einem Flächengewicht von 450 g/m² und verpreßte zu einem 1,6 mm dicken Formkörper.

An aus diesem Halbzeug ausgestanzten Prüfkörpern wurden die in der folgenden Tabelle zusammengefaßten mechanischen Eigenschaften gemessen.

Tabelle

| Beispiele | | 1 | 2 | 3 | 4 | 5 |
|---|---|---|---|---|---|---|
| mechanische Eigenschaften: | | | | | | |
| Glasgehalt (Glührückstand) | [%] | 25 | 25 | 25 | 20 | 20 |
| Härte nach DIN 53 505 | [Shore D] | 69 | 67 | 69 | 66 | 65 |
| E-Modul aus Zugversuch nach DIN 53 457 | [N/mm$^2$] | 2630 | 2770 | 3240 | 2320 | 2160 |
| Zugfestigkeit nach DIN 53 504 | [N/mm$^2$] | 50,7 | 40,7 | 55,3 | 40,7 | 40,8 |
| Bruchdehnung nach DIN 53 504 | [%] | 3,1 | 2,5 | 3,9 | 3,3 | 3,3 |
| Schlagzähigkeit nach DIN 53 453 bei | | | | | | |
| 23°C | [kJ/m$^2$] | 71,2 | 38 | 38,9 | 50,3 | 38,8 |
| 0°C | [kJ/m$^2$] | 45,1 | 37 | 35,8 | 36,8 | 25,9 |
| -20°C | [kJ/m$^2$] | 32,9 | 28,6 | 36,4 | 29,3 | 27,6 |
| -40°C | [kJ/m$^2$] | 31,9 | 26,8 | 37,8 | 26,0 | 26,2 |

**Patentansprüche**

1. Verfahren zur kontinuierlichen Herstellung von Halbzeug aus faserverstärkten, thermoplastischen Polyurethanen, dadurch gekennzeichnet, daß man

a) organische Polyisocyanate,

b) Polyhydroxylverbindungen mit Molekulargewichten von 500 bis 8000 und

c) Kettenverlängerungsmittel mit Molekulargewichten kleiner als 500 in Gegenwart von

d) Katalysatoren sowie gegebenenfalls

e) Hilfsmitteln und/oder

f) Zusatzstoffen

kontinuierlich in solchen Mengen mischt, daß das Verhältnis von NCO-Gruppen der Komponente a) zur Summe der Zerewitinoff aktiven Wasserstoffatome der Komponenten b) und c) 0,5 bis 1,3 ist und der Gewichtsanteil der Summe aus organischem Polyisocyanat a) und Kettenverlängerungsmittel c), bezogen auf das Gewicht des thermoplastischen Polyurethans, 10 bis 80 Gew.-% beträgt, die fließfähige Reaktionsmischung auf ein faserhaltiges Flächengebilde aufbringt und nach dem Bandverfahren in einer temperierten Zone bei Temperaturen von 60 bis 220°C bis zur Erstarrung reagieren läßt.

2. Verfahren nach Anspruch 1, dadurch gekennzeichnet, daß man mit fließfähiger Reaktionsmischung beaufschlagte faserhaltige Flächengebilde mit einer Geschwindigkeit von 1 bis 40 m/Minute durch eine temperierte Zone von 1 bis 40 m Länge führt.

3. Verfahren nach Anspruch 1, dadurch gekennzeichnet, daß man die faserhaltigen Flächengebilde vor dem Aufbringen der Reaktionsmischung auf 50 bis 200°C erwärmt.

4. Verfahren nach Anspruch 1, dadurch gekennzeichnet, daß man die faserhaltigen Flächengebilde auf einem Träger, der die Form eines Förderbandes besitzt, führt, zwischem dem faserhaltigen Flächengebilde und dem Träger eine Trennfolie mitführt und die mit Reaktionsmischung beaufschlagten faserhaltigen Flächengebilde mit einer Deckfolie beschichtet.

5. Verfahren nach Anspruch 1, dadurch gekennzeichnet, daß man die mit Reaktionsmischung beaufschlagten faserhaltigen Flächengebilde mit Hilfe der Deckfolie und Trennfolie sowie dem Träger und mehreren Rollen auf eine Dicke von 0,2 bis 10 mm preßt.

6. Verfahren nach Anspruch 1, dadurch gekennzeichnet, daß man als faserhaltiges Flächengebilde Glasfasermatten, vorzugsweise mit Flächengewichten von 400 bis 600 g/m2 verwendet.

7. Verfahren nach Anspruch 1, dadurch gekennzeichnet, daß das fertige Halbzeug aus faserverstärktem, thermoplastischem Polyurethan, bezogen auf das Gesamtgewicht, 10 bis 70 Gew.% faserhaltiges Flächengebilde enthält.

8. Verfahren nach Anspruch 1, dadurch gekennzeichnet, daß das aus der Reaktionsmischung gebildete unverstärkte thermoplastische Polyurethan eine Härte von 40 bis 80 Shore D besitzt.

9. Verfahren nach Anspruch 1, dadurch gekennzeichnet, daß man als organische Polyisocyanate 4,4'-Diisocyanatodiphenylmethan oder Naphthalin-1,5-diisocyanat verwendet.

10. Verfahren nach Anspruch 1, dadurch gekennzeichnet, daß man als Polyhydroxylverbindungen im wesentlichen lineare hydroxylgruppenhaltige Polyester oder Polytetrahydrofurane mit Molekulargewichten von 1200 bis 8000 verwendet.

## Claims

1. A process for the continuous production of semi-manufactures consisting of fiber-reinforced thermoplastic polyurethanes, wherein
(a) organic polyisocyanates,
(b) polyhydroxy compounds having molecular weights of from 500 to 8000, and
(c) chain extenders having molecular weights of less than 500,
in the presence of
(d) catalysts and, if desired,
(e) auxiliaries and/or
(f) additives,
are mixed continuously in such quantities that the ratio of NCO groups of component (a) to the sum of the Zerewitinoff-active hydrogen atoms of components (b) and (c) is from 0.8 to 1.3, and the sum of the weights of organic polyisocyanate (a) and chain extender (c) is 10 to 80% of the weight of the thermoplastic polyurethane, and the flowable reaction mixture is applied to a fiber-containing sheet-like structure and allowed to react, using the belt method, in a heated zone at a temperature of from 60 to 220°C until solidification occurs.

2. A process as claimed in claim 1, wherein the fiber-containing sheet-like structure to which the flowable reaction mixture has been applied is passed at a rate of 1 to 40 meters/minute through a heated zone 1 to 40 meters in length.

3. A process as claimed in claim 1, wherein the fiber-containing sheet-like structure is heated to 50 to 200°C prior to the application of the reaction mixture.

4. A process as claimed in claim 1, wherein the fiber-containing sheet-like structure is transported on a substrate which is in the form of a conveyor belt, a release film material is interposed between the fiber-containing sheet-like structure and the substrate, and the fiber-containing sheet-like structure to which the flowable reaction mixture has been applied is covered with a cover sheet.

5. A process as claimed in claim 1, wherein the fiber-containing sheet-like structure to which the flowable reaction mixture has been applied is compressed between the cover sheet and the release film material to a thickness of from 0.2 to 10 mm with the aid of the substrate and a plurality of rollers.

6. A process as claimed in claim 1, wherein a glass fiber mat preferably having a weight of from 400 to 600 g/m² is used as the fiber-containing sheet-like structure.

7. A process as claimed in claim 1, wherein the finished semi-manufacture consisting of fiber-reinforced thermoplastic polyurethane contains from 10 to 70% by weight, based on the total weight, of the fiber-containing sheet-like structure.

8. A process as claimed in claim 1, wherein the non-reinforced thermoplastic polyurethane formed from the reaction mixture has a Shore D hardness of 40 to 80.

9. A process as claimed in claim 1, wherein 4,4'-diisocyanatodiphenylmethane or naphthalene-1,5-diisocyanate is used as organic polyisocyanate.

10. A process as claimed in claim 1, wherein essentially linear hydroxyl-containing polyesters or polytetrahydrofurans having molecular weights of from 1200 to 8000 are used as polyhydroxy compounds.

## Revendications

1. Procédé pour la fabrication en continu d'un demiproduit à partir de polyuréthannes thermoplastiques renforcés par des fibres, caractérisé en ce que l'on mélange de façon continue
a) des polyisocyanates organiques,
b) des composés polyhydroxylés avec des poids moléculaires de 500 à 8 000 et
c) des agents d'allongement des chaînes avec des poids moléculaires inférieurs à 500
en présence
d) de catalyseurs
et le cas échéant
e) d'adjuvants et(ou)
f) d'additifs
en des proportions telles que le rapport entre les groupes -NCO de la composante a) et la somme des atomes d'hydrogène actifs selon Zerevitinov des composantes b) et c) se situe entre 0,8 et 1,3 et la somme des poids du polyisocyanate organique a) et de l'agent d'allongement des chaînes c) représente entre 10 et 80 % du poids du polyuréthanne thermoplastique, on dépose le mélange réactionnel fluide sur un matériau plat contenant des fibres et on le laisse réagir dans une zone chauffée à des températures de 60 à 220°C jusqu'à sa solidification.

2. Procédé suivant la revendication 1, caractérisé en ce que l'on fait passer les matériaux plats contenant des fibres et portant un mélange réactionnel fluide avec une vitesse de 1 à 40 m par minute à travers une zone chauffée d'une longueur de 1 à 40 m.

3. Procédé suivant la revendication 1, caractérisé en ce que les matériaux plats contenant des fibres sont chauffés entre 50 et 200°C avant le dépôt du mélange réactionnel.

4. Procédé suivant la revendication 1, caractérisé en ce que les matériaux plats contenant des fibres sont entraînés par un support du type courroie transporteuse, une pellicule de séparation étant intercalée entre le support et le matériau plat et le mélange réactionnel déposé sur le matériau plat contenant des fibres recouvert d'une pellicule de couverture.

5. Procédé suivant la revendication 1, caractérisé en ce que les matériaux plats contenant des fibres, portant le mélange réactionnel, sont comprimés à l'aide de la pellicule de séparation et de la pellicule de couverture, ainsi que du support et de plusieurs rouleaux, à une épaisseur comprise entre 0,2 et 10 mm.

6. Procédé suivant la revendication 1, caractérisé en ce que les matériaux plats contenant des fibres sont des mats de fibres de verre, de préférence avec un poids au mètre carré compris entre 400 et 600 g.

7. Procédé suivant la revendication 1, caractérisé en ce que le semi-produit en polyuréthanne thermoplastique renforcé par des fibres terminé contient entre 10 et 70 % de son poids de matériau plat contenant des fibres.

8. Procédé suivant la revendication 1, caractérisé en ce que le polyuréthanne thermoplastique non renforcé, produit par le mélange réactionnel, possède une dureté Shore D de 40 à 80.

9. Procédé suivant la revendication 1, caractérisé en ce que les polyisocyanates organiques sont choisis parmi le 4,4'-diisocyanato-diphénylméthane et le 1,5-diisocyanate de naphtalène.

10. Procédé suivant la revendication 1, caractérisé en ce que les composés polyhydroxylés sont essentiellement choisis parmi les polytétrahydrofurannes et les polyesters linéaires à groupes hydroxyle avec des poids moléculaires de 1200 à 8000.